# EUROPEAN PATENT SPECIFICATION

(11) **EP 1 606 370 B1**
(45) Date of publication and mention of the grant of the patent: **13.08.2008**
(21) Application number: 04706698.0
(22) Date of filing: 30.01.2004
(51) Int. Cl.: C10B 53/02, C10J 3/58

(54) **METHOD FOR PRODUCING SYNTHESIS GAS**
VERFAHREN ZUR HERSTELLUNG VON SYTHESEGAS
PROCEDE DE PRODUCTION D'UN GAZ DE SYNTHESE

(30) Priority: 17.02.2003 FI 20030241
(43) Date of publication of application: 21.12.2005
(73) Proprietor: Neste Oil Oyj, 02150 Espoo (FI)
(72) Inventor: JOKELA, Pekka, 02660 Espoo (FI); GRÖNQVIST, Johan, 06100 Porvoo (FI); HILTUNEN, Jyrki, 06100 Porvoo (FI)
(74) Representative: Sundman, Patrik Christoffer
(86) International application number: PCT/FI2004/000048
(87) International publication number: WO 2004/072207

(56) References cited:
- EP-A2- 1 134 272
- WO-A2-02/50214
- US-A- 4 028 068
- US-A- 4 568 362
- US-A- 5 344 848

## Description

The present invention relates to the production of synthesis gas. More particularly, the invention relates to a method according to the preamble of claim 1 for producing good-quality synthesis gas from a solid, ash-containing feedstock such as biomass.

The invention also relates to a method for producing traffic fuels from biomass.

Synthesis gas is a general name for gas mixtures that chiefly contain hydrogen and carbon monoxide and are used as raw material for different chemical processes, such as ammonium, methanol and Fischer-Tropsch synthesis, in hydrogen production and as fuel in energy generation.

Today, plural methods are known in the art for producing synthesis gas. Commercial techniques of synthesis gas production are based on steam reforming of natural gas, particularly the methane thereof, and industrial gasoline, autothermal reforming of natural gas or heavier hydrocarbons (with partial oxidation and steam reforming in a single reactor), oxygen reforming after steam reforming (to produce ammonium), partial oxidation of hydrocarbons, coke or coal (with oxygen gasification) and reforming of carbon dioxide.

High-quality synthesis gas in the context of this invention refers to gas suited for use as feedstock in chemical processes, such as the production of traffic fuels. Today, four methods have been developed to a commercial stage of converting synthesis gas into a traffic fuel (GTL, Gas to Liquid). These paths are:
1. Fischer-Tropsch synthesis;
2. via methanol, using, e.g., the MTG- (Methanol to Gasoline) or the MTO (Methanol to Olefin) process of Mobil Corp.;
3. from production of pure methanol into fuel (M100) or into a fuel component (M85); and
4. via methanol to oxygenate production.

The simplified reaction formula of the Fischer-Tropsch process is:

CO + 2H₂ ⇒ [-CH₂-] + H₂O

Respectively, methanol conversion processes can be described by the following formulas:

CO + 2H₂ ⇒CH₃OH Methanol synthesis

CH₃OH ⇒ [-CH₂-] + H₂O Methanol conversion

CO + 2H₂ ⇒ [-CH₂-] + H₂O Overall reaction

While the reactions are basically identical, they proceed via different intermediate steps.

More generally, the term GTL (Gas to Liquid) refers to processes in which synthesis gas is used to produce liquid products or hydrogen.

Commercial applications of biomass gasification are based on air gasifiers producing synthesis gas rich with nitrogen that is used in energy generation. While the nitrogen remaining in the synthesis gas lowers the heating value of the gas, this can be tolerated in applications that use the gas as a fuel.

Indirect biomass gasification is in a developing stage. The most commonly used indirect gasification system layout comprises a gasifier and a separate char combustor. The thermal energy required for the gasification reactions is imported to the gasifier by inert solids circulated from the char combustor. Generally, sand is used as circulating solids. Ash, sand and char are separated from the gas stream in the upper portion of the gasifier and passed to the char combustor. In the combustor, the char is combusted together with other fuel by air injection. Such a system is described, e.g., in patent publication US 4,828,581 and in international patent application WO 02/50214. Herein, gasification takes place basically in a single-phase system, wherein in single unit (gasifier) a solid fuel such as biomass is converted to synthesis gas. Without further processing, however, the quality of the synthesis gas obtained from this kind of gasifier does not fulfill the requirements set on good-quality synthesis gas.

In international patent application WO 00/06671 is described a two-stage method in which pyrolysis gases are combusted and the char is gasified. In patent publication US 4,497,637 is described a two-stage method where the char of pyrolysis and the pyrolysis oil are gasified in the presence of steam and oxygen. In patent publication US 5,344,848 is described a two-phase process in which the first stage performs partial gasification of biomass at 800 °C temperature and 50 bar pressure. Ash is also separated in the first stage. Subsequently the gasification process of the second stage is carried out with the help of steam at 30 bar pressure and 1000 °C temperature. An essential feature of the invention disclosed in the claims is that also a substantial quantity of natural gas is fed to the gasification zone.

The single-stage method disclosed in patent publication US 4,678,860 operates at a high temperature of 650 -1100 °C. Due to the high process temperature, the "intermediate synthesis gas" mentioned in the patent publication not only has a high content of CO and H₂ but also contains a substantial amount of olefins. In the method disclosed in this patent publication, the "intermediate synthesis gas" is taken directly to a liquefaction process. As the quality of the "intermediate synthesis gas" described in the patent publication is low, processing problems may be expected in the liquefaction process. US-A-4028068 describes waste in particulate form carbonized at 300-600°C and the product passed to a stage where it is heated in air to 1000-1200°C. Dust is separated between the 2 stages. US-A-4568362 describes pyrolysis of lignocellulose products in the presence of refractory particles at 700-900°C. After further cracking product is conveyed with solid particles to a combustion reator. Heated refractory particles are returned to pyrolysis.

Conventional technologies are hampered by major shortcomings. To make the proportions of hydrogen and carbon monoxide sufficiently high in the synthesis gas, the gasification temperature should be at least 800 °C. However, a product gas obtained at such a low temperature can be used directly only in fuel applications that tolerate tar and light hydrocarbons in the gas. In this context, tar means compounds heavier than benzene, that is, compounds having a molecular weight greater than 78 g/mol. In other combustion processes than gasification, the gasification temperature must preferably be above 1000 °C in order to avoid an excessively high amount of tar compounds and light hydrocarbons in the product gas.

In indirect gasification of biomass, the thermal energy is typically imported from combustion to the gasification process with the help of circulating sand. Herein, the combustor temperature need be at least 100 °C higher than the reactor temperature to avoid an excessively massive sand circulation rate. As the combustion temperature must be high, there is risk of reaching a temperature level at which the ash of many kinds of biomasses used as fuel is in a molten state. Obviously, the process technology required to handle this problem becomes extremely complicated.

It is an object of the present invention to provide an entirely novel approach to the production of high-quality synthesis gas.

The goal of the invention is directed to the conversion of ash-containing solid feedstock, such as biomass, into high-quality synthesis gas such that can be used as raw material in processes producing traffic fuels. According to the invention, the biomass-containing feedstock is pyrolyzed so as to obtain pyrolysis gas and char. Ash and solids are separated from the pyrolysis gas. The ash-free and solids-free pyrolysis gas is subsequently gasified into synthesis gas and the char is combusted.

More specifically, the method according to the invention is characterized by what is stated in appended claim 1.

The invention offers significant benefits. Good-quality synthesis gas can be produced by virtue of the invention.

Many biomass-type raw materials, such as municipal waste and agricultural waste, have a high ash content. Handling the ash in a synthesis gas generation process, particularly if the ash becomes molten is problematic. However, the content of the feedstock causes no problems in the embodiment of the present invention, because removal of ash and combustion of char are carried out at such a low temperature that ash cannot melt. Combustion can be carried out at a low temperature inasmuch as also pyrolysis is carried out at a low temperature of about 450 - 550 °C. In this manner, good-quality synthesis gas may be produced also from feedstock of high ash content without the technical process problem generally caused by the melting of ash.

In the invention pyrolysis is at a low temperature of about 500 °C, also char combustion can be performed at a relatively low temperature below 800 °C, advantageously at a temperature of about 700 - 750 °C. Thus, this overcomes the problems of ash melting, clinker formation in the bed and, further, does not require the char combustion chamber to have a refractory liner.

In a conventional pyrolysis oil process, the feedstock moisture content must be low, less than 10 %, because otherwise moisture will substantially degrade the product qualities. Efficient drying of feedstock, however, is energy consuming and creates a risk of fire. Hence, fire protection in the system must be assured at a high capital cost involving measurements, nitrogen flushing, automation and control. In an embodiment of the invention suited for pyrolysis gas generation, the moisture contained in the feedstock causes no problems in the process, whereby the requirement of low moisture content in feedstock is obviated. This benefit is gained by way of passing the pyrolysis gas further to a gasification process wherein steam is needed anyhow.

Prior-art technology has been hampered by tar-like components, particularly condensation thereof, during the process. In an embodiment of the invention, the temperature of pyrolysis gases between the pyrolyzer and gasifier stages, as well as during actual gasification, can be kept high inasmuch as the risk of melting the solids is eliminated. This is because solids are substantially completely separated from the pyrolysis gases already in a separator downstream of the pyrolyzer. Due to the high gasification temperature, the tar components cannot cause problems in the process.

The invention has embodiments capable of effective separation of ash and other solids from the pyrolysis gases.

To produce high-quality synthesis gas, it is frequently necessary to use a catalyst in the gasification stage. However, solids carried over with the pyrolysis gases prevent the use of a catalyst. Now, this invention offers embodiments capable of alleviating this problem by way of having the solids, particularly ash from char combustion, substantially completely removed already in the pyrolysis stage. After the separation of solids, the pyrolysis gases advantageously contain solids less than 0.1 wt- %.

The solids are removed already in the pyrolysis stage, the gasifier conditions are favorable for the catalyst used in the gasification stage. According to a preferred embodiment of the invention, the catalyst is in monolith form.

According to an embodiment of the present invention, gasification can be carried out in a gasifier comprising simply a single heat-resistant tube with a refractory liner and a monolith. Gasification is accomplished by feeding additional oxygen to the gasifier.

In the following, the invention is examined in more detail with the help of the appended drawing in which

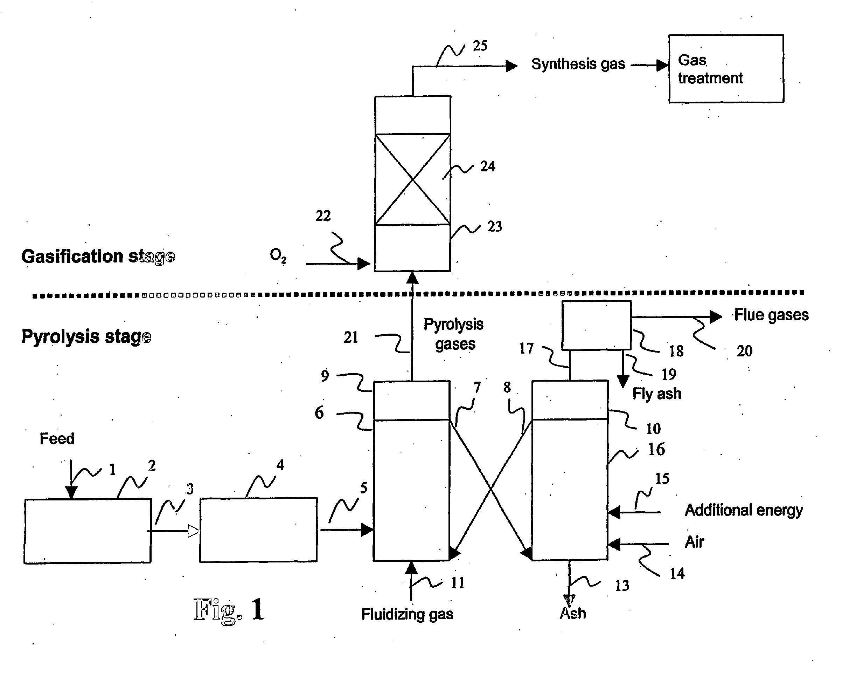

FIG. 1 shows the process layout of an embodiment of the invention suited for producing good-quality synthesis gas from solid feedstock.

Referring to FIG. 1 illustrating an exemplary embodiment, solid feedstock 1 is comminuted in a shredder 2 into sufficiently small pieces. The comminuted feedstock 3 is transported to a dryer 4 wherein the feedstock is dried with the help of flue gas or steam to a moisture content of 15 - 25 %.

The dried feedstock 5 is taken to a pyrolyzer 6 where it is fluidized with sand 8 passed thereto from char combustor 16. When a feedstock particle travels in the vertical channel of the pyrolyzer, it heats up whereby volatiles leave the particle and the gas flow conveys the particle to a solids separator 9. The separator is preferably a two-stage cyclone assembly such that at least the latter stage is a multiport cyclone. Sand and remaining char pass along a channel 7 to a char combustor 16.

According to one embodiment of the invention, the solids separator is a cyclone assembly comprising one or more cyclones connected in parallel or in series with each other. Advantageously at least one multiport cyclone is included in the cyclone assembly. While separation of fines, some of the particles being really lightweight, from an air or gas flow is difficult in a single-port cyclone, a multiport cyclone can accomplish this job.

The pyrolyzer operating temperature is 450 - 550 °C, preferably about 500 °C. The char combustor is operated at a temperature of 600 - 800 °C, preferably at about 750 °C. The combustor operating temperature is advantageously adjusted such that the ash of the pyrolysis residue does not melt. The unit comprising the pyrolyzer and combustor may be operated at a pressure close to the ambient pressure or, alternatively, the unit may be pressurized if considered advantageous on economic reasons dictated by the subsequent processes.

According to a preferred embodiment of the invention, the pyrolyzer can be implemented in the fashion described in patent application FI 20010781.

Pyrolysis gases 21 are taken to a gasifier 23 wherein also external energy is supplied to elevate the gas temperature to at least 800 °C. The additional energy may be generated internally by way of oxidizing a portion of the pyrolysis gas with extra oxygen injected to the gasifier. Alternatively, the external energy can be supplied via the gasifier wall or using a medium such as circulating sand as the heat transferring material. The external energy is extracted from flue gases or a combustion process.

A catalyst may be used in the gasifier to bring the reactions therein closer to the chemical equilibrium or, alternatively, oxygen injection can be used to elevate the gas composition to a temperature where tar components and hydrocarbons heavier than methane are practically nonexistent.

In the process of the exemplary embodiment, the temperature of pyrolysis gases is prevented from falling below 500 °C, whereby no condensation of the tar components of pyrolysis gases can occur.

According to a preferred embodiment, the gasifier 23 comprises simply a tubular vessel with a refractory liner and a monolith. Oxygen is injected to the gasifier to elevate the reaction temperature to a desired level.

From the gasifier, synthesis gas 25 is taken to gas treatment 26, which includes heat recovery and further purification of the gas, whereupon the gas is passed further to hydrogen production or GTL (Gas to Liquid) synthesis.

The invention also covers an embodiment, in which gas treatment includes heat recovery, filtration, scrubbing and, depending on the intended use of the synthesis gas, removal of undesired components such as sulfur compounds and carbon dioxide. The embodiment may also include compression of the synthesis gas if the pressure levels of the gasification and GTL process stages are different.

The char and sand received from the separator unit of the pyrolyzer are fluidized by air 14 in the vertical channel of char combustor 16. There, char is combusted whereby it simultaneously heats the sand circulated therewith. When necessary, additional energy 15 is imported as extra fuel or heat. The heated sand is removed in separator 10 and passed along duct 8 back to pyrolyzer 6. Advantageously, the separator is a multiport cyclone. Flue gases 17 are passed to an external separator that also advantageously is a multiport cyclone.

In a preferred embodiment of the invention, biomass is pyrolyzed at a low temperature and ash is separated therefrom before gasification into synthesis gas. Gasification is carried out a high temperature. The gas-phase product components leaving the pyrolyzer at about 500 °C temperature are passed to the gasifier, where the pyrolysis gases are refined into synthesis gas through direct gasification. The refining process is carried out with the help of the steam carried along with the gas stream and the oxygen of the feedstock components. The temperature is elevated to 800 - 1500 °C by oxygen injection to the gasifier.

In one embodiment of the invention, ash and char are separated from the pyrolysis gases at a temperature of about 500 °C. The char comprising coke and ash is combusted in a separate combustion chamber, wherefrom the heat released therein is circulated with the hot solids of the bed to the pyrolysis process.

In certain embodiments of the invention, the quality of the synthesis gas can be improved by way of using a suitable catalyst in the gasifier. With the help of the elevated temperature and the monolith, the pyrolysis gases produced by the pyrolyzer can be refined into feedstock components, hydrogen and carbon oxides that may be used as feedstock in GTL processes.

In an alternative embodiment of the invention, the import of external energy to the gasification stage occurs indirectly in lieu of using direct oxygen injection to the gas. Herein, externally to the gasification chamber is combusted natural gas or other fuel gas, advantageously product gas rejected from a GTL process (so-called tail gas) and/or fumes from a pyrolyzer in the same fashion as in steam reforming reactors.

In the production of pyrolysis oil, the biomass feedstock must be shredded into very small particles, typically smaller than 8 mm, in order to maximize the product yield. When pyrolysis gases are produced for gasification; the energy consumption is higher and, hence, there is no need to maximize the amount of produced gas, whereby also the feedstock can be introduced with a larger particle size. The possibility of using larger particles reduces drastically the operating and capital investment costs of feedstock comminution. If the pyrolysis gases are used in gasification, the particle size can be close to the size of comminuted fuel combusted in a BFB or CFB boiler and, thus, raw material comminution may be performed using conventional shredder constructions.

In the pyrolysis of moist feedstock, the energy consumption of the char combustor is substantially higher than in pyrolysis processes that are run to produce a pyrolysis fuel. In the case that the heat content of char alone is insufficient, the energy consumption must be lowered by reducing the moisture content of the feedstock entering pyrolysis so much as can be accomplished by practical means.

A simple way of supplying the combustor with the necessary extra energy (complementing the energy released from char combustion) is to leave a portion of the feedstock unpyrolyzed and take it together with the char to the combustor. This can be accomplished by using feedstock particles of large size. The amount of pyrolysis liquid need not be maximized inasmuch as the process produces pyrolysis gas. In other words, the process energy balance can be equalized by selecting a suitable particle size and retention time for the feedstock in the pyrolyzer.

In one embodiment of the invention, the feedstock particle size can even be so large that the terminal velocity of the particle is greater than the fluidization velocity used in the pyrolyzer, because suspension formed by the fluidized solids "transports" large particles in the gasifier. This embodiment facilitates a simple pyrolyzer construction and processing of large feedstock particles in the pyrolyzer. The extra energy needed in the char pyrolyzer is generated simply by combusting the portion of feedstock that is left unpyrolyzed. Typically, pyrolysis of a large feedstock particle has been possible only by extending the retention time in the pyrolyzer that may lead to a very complicated system concept.

Another way of importing to the combustor the extra energy needed therein is to complement the combustion of char in the combustor by taking to the combustor combustible sidestreams, either gaseous or liquid, that are obtained from a GTL process operating downstream of the gasifier. Advantageously, the combustible sidestream is synthesis gas (so-called tail gas) remaining unreacted in the GTL process. This embodiment may also be utilized in conventional indirect gasification.

In a plant designed to produce liquid traffic fuels from synthesis gas obtained via gasification from biomass-based raw materials, different kinds of product streams and sidestreams, both gaseous and liquid, are formed such that cannot be utilized in the production of liquid fuel. Undeniably the most important of these is the portion of synthesis gas (so-called tail gas) remaining unreacted in the liquid fuel synthesis. Conventionally, this gas stream whose energy content, depending on the plant configuration and operating policy, may represent about 20 - 40 % of the overall energy content of the raw material entering the liquid fuel production plant, has been targeted to electricity generation by a gas turbine plant. Hence, the liquid fuel production plant must necessarily be integrated with an energy generating plant. For balanced energy generation, the power plant must generally be constructed operable on a supplementary fuel (complementing the combustion of streams from the liquid fuel production plant). This requirement increases substantially the capital investment cost of the liquid fuel production plant.

The invention further has an embodiment in which the gaseous and liquid product and waste streams of a liquid fuel production plant are circulated to bring additional energy to the generation of synthesis gas. Thus, the product and waste streams can be utilized to import additional energy to the gasification stage. The product/waste streams are passed to the pyrolyzer and possibly also to the combustor of the gasifier unit. The energy content of the unreacted portion of synthesis gas may be so high that no other extra energy need be imported to the combustor. At least the circulation of unreacted synthesis gas substantially reduces the need for import of external energy. However, the combustor must be provided with facility of combusting supplementary fuel for start-up and disturbance situations.

This embodiment also includes the possibility of circulating to the combustor different kinds of liquid sidestreams of a fuel production plant, such as impure product streams, wash solutions and gaseous sidestreams. Among the gaseous waste streams, typical are the discharge streams of the scrubbing unit of acid gases (H₂S, CO₂, etc.).

The invention also relates to an embodiment in which gas streams from process stages (situated) downstream of the gasifier can be circulated to a combination pyrolyzer-gasifier. This embodiment may also be applied to conventional indirect gasification.

In steam gasification, steam reacts with the raw material and the gaseous components formed in gasification. Some of the gasification reactions can be described by the following reaction formulas:

C + H₂O = CO + H₂

CO + H₂O = CO₂ + H₂

CH₄ + H₂O = CO + 3H₂

CH₄ + 2H₂O = CO₂ + 4H₂

CₙHₘ + 1/4 (4n-m)H₂O = 1/8 (4n+m)CH₄ + 1/8 (4n-m)CO₂

The amount of reacting steam has a great effect on the degree of carbon conversion and the composition of the product gas. The fuel moisture content and the amount of additional steam fed to the gasifier determine the amount of steam in the gasifier. In conventional indirect steam gasification, the bed material and fuel are transported to the upper portion of the gasifier with the help of steam flow. Herein, the minimum mass flow rate of the steam is determined by the transport ability of the steam flow, the bed material and the raw material. Hence, the amount of additional steam cannot be freely used as a control variable. Due to technical constraints imposed on dryer constructions, the moisture content of the raw material cannot be utilized as a control variable.

Replacing pure steam used in the pyrolyzer as the carrier gas of the bed material and the raw material with a mixture of steam and partially purified/cooled synthesis gas, the amount of the additional steam can be utilized as a control variable. The minimum mass flow rate of the additional steam is reduced when both the steam and the circulated synthesis gas function as the fluidization gas (carrier gas) of bed material and fuel. Circulation of synthesis gas allows the mass flow rate of steam injection to be adjusted over a scale of 0 - 100 %. The feedback signal to the control of steam and synthesis gas circulation rate may be taken from, e.g., a real-time measurement system of synthesis gas composition.

In addition to partially purified and cooled synthesis gas, the gasifier may be adapted to receive also other gas streams that are obtained from gas purification units situated downstream of the gasifier. Such a gas stream can be, e.g., carbon dioxide separated from the synthesis gas that, in addition to the above-discussed, reacts with the raw material as follows:

C + CO₂ = 2CO

Other gas streams may be, e.g., the unreacted portion of synthesis gas (so-called tail gas) from the synthesis step and like sidestreams.

To the production of fuel components (e.g., methanol, ethanol, Fischer-Tropsch hydrocarbons) suggested to be used in traffic biofuels the best feedstock is synthesis gas in which the hydrogen-carbon monoxide ratio (H₂/CO ratio) is only slightly above the stoichiometric ratio. If the gasification stage does not include a sufficient number of control variables that can be adjusted to effect the product gas composition (and thus the H₂/CO ratio), it is obvious that variations in the raw material type and quality, moisture content of raw material and unsteady operation of the dryer preceding the gasifier resulting in process fluctuations will directly influence the product gas composition.

In the embodiment of the invention, the above-mentioned variations in the product gas composition can be equalized. When circulated product gas and/or other gas streams such as carbon dioxide separated from the product gas is used partially as a carrier gas, the process control can be accomplished with the help of the additional steam. Then, the product gas composition may be steered toward a direction of lesser or higher hydrogen content by adjusting the amount of added steam. Furthermore, the use of circulating gases gives a greater freedom in the selection of bed material.

## Claims

1. A method for producing synthesis gas from a biomass feedstock in a pyrolyzer-gasifier apparatus, **characterized by**
- comminuting and drying the biomass feedstock,
- feeding the comminuted and dried biomass to the pyrolyzer in which, under a substantially oxygen-free atmosphere, in contact with inorganic particulate matter of sand and at a pyrolysis operating temperature of 450 - 550 °C, pyrolysis gas and solid char are formed,
- separating the pyrolysis gases from char in a solids separator,
- feeding the essentially solids-free and essentially ash-free pyrolysis gases to the gasifier, whereto additional heat is supplied in order to form synthesis gas, the gasifier having an operating temperature of 800-1500 °C, and
- passing the char containing carbon and ash to a combustion chamber and combusting the char therein at a temperature below 800 °C to heat the inorganic particulate matter.

2. The method according to claim 1, **characterized in that** pyrolysis is carried out in a combination apparatus comprising at least 2 circulating-solids reactors, whereby pyrolysis occurs in the first reactor and the regeneration and heating of the circulating inorganic material as well as char combustion takes place in the second reactor.

3. The method according to claim 1 or 2, **characterized in that** the char combustion temperature is preferably 700 - 750 °C.

4. The method according to any one of claims 1 - 3, **characterized in that** the pyrolyzer operating temperature is preferably 475 - 525 °C.

5. The method according to any one of claims 1 - 4, **characterized in that** additional oxygen is introduced to the gasifier by 0 - 50 % of the amount of pyrolysis gas thus accomplishing elevation of gasifier temperature and oxidation of gas.

6. The method according to any one of claims 1 - 5, **characterized in that** the gasifier temperature is elevated with the help of external energy by way of importing the extra energy to the gasifier through its wall.

7. The method according to any one of claims 1 - 6, **characterized in that** prior to being passed to the pyrolysis process, the biomass feedstock is dried to a moisture content of 15 - 25 wt-%.

8. The method according to any one of claims 1 - 7, **characterized in that** the pyrolysis gas preferably contains less than 0.1 wt- % solids.

9. The method according to any one of claims 1 - 8, **characterized in that** the gasifier comprises a tubular vessel with a refractory liner.

10. The method according to any one of claims 1 - 9, **characterized in that** the gasifier comprises a catalyst preferably in the form of a monolith.

11. The method according to any one of claims 1 -10, **characterized in that** steam is imported to the gasifier in order to modify the composition of the synthesis gas.

12. The method according to any one of claims 1 - 11, **characterized in that** steam is imported to the gasifier only along with the pyrolysis gas stream.

13. The method according to any one of claims 1 - 12, **characterized in that** additional heat is imported to the gasifier by circulating gaseous and liquid product streams and sidestreams from later processing steps of the gas.

14. The method according to any one of claims 1 - 13, **characterized in that** fluidization in the pyrolyzer stage is accomplished with the help of steam, circulated product gas, other gas streams such as carbon dioxide separated from the product gas or mixtures of the above-mentioned gas species.

15. The method according to any one of claims 1 - 14, **characterized in that** 20 - 100 % feedstock is pyrolyzed.

16. The method according to any one of claims 1-15, **characterized in that** the pyrolysis gases are separated in a separator unit formed by a cyclone assembly comprising at least one multiport cyclone.

17. The method according to any one of claims 1-16, **characterized in that** the synthesis gas is passed to a gas treatment step that advantageously is GTL synthesis or hydrogen production.

18. A method for producing traffic fuel, **characterized in that** the synthesis gas produced according to any one of claims 1 - 16 is passed to a GTL synthesis step suited or producing diesel oil or methanol.

## Patentansprüche

1. Verfahren zur Herstellung von Synthesegas aus einem Biomassenausgangsbrennstoff in einer Pyrolysevergasungsvorrichtung, **gekennzeichnet durch**
- Verkleinern und Trocknen des Biomassenausgangsrnaterials,
- Zuführen der verkleinerten und getrockneten Biomasse in den Pyrolysator, in welchem unter einer im Wesentlichen sauerstofffreien Atmosphäre in Kontakt mit anorganischem partikulären Material aus Sand und bei einer Pyrolyse-Betriebstemperatur von 450 - 550 °C Pyrolysegas und festes Schwelprodukt gebildet werden,
- Abtrennen der Pyrolysegase von dem Schwelprodukt in einem Feststoffabscheider,
- Zuführen der im Wesentlichen feststofffreien und im Wesentlichen aschefreien Pyrolysegase in den Vergaser, dem zusätzliche Wärme zugeführt wird, um Synthesegas zu bilden, wobei der Vergaser eine Betriebstemperatur von 800- 1500 °C hat, und
- Bringen des Schwelprodukts, welches Kohlenstoff und Asche enthält, in eine Verbrennungskammer und Verbrennen des Schwelprodukts darin bei einer Temperatur unter 800 °C, um anorganisches partikuläres Material zu erhitzen.

2. Verfahren nach Anspruch 1, **dadurch gekennzeichnet, dass** die Pyrolyse in einer Kombinationsvorrichtung durchgeführt wird, die zumindest 2 Reaktoren für zirkulierenden Feststoff umfasst, wobei Pyrolyse in dem ersten Reaktor erfolgt und die Regeneration und Erhitzen des zirkulierenden anorganischen Materials sowie die Verbrennung des Schwelprodukts in dem zweiten Reaktor stattfindet.

3. Verfahren nach Anspruch 1 oder 2, **dadurch gekennzeichnet, dass** die Verbrennungstemperatur für das Schwelprodukt vorzugsweise bei 700 - 750 °C liegt.

4. Verfahren nach einem der Ansprüche 1 - 3, **dadurch gekennzeichnet, dass** die Pyrolysebetriebstemperatur vorzugsweise bei 475 - 525 °C liegt.

5. Verfahren nach einem der Ansprüche 1 - 4, **dadurch gekennzeichnet, dass** zusätzlicher Sauerstoff entsprechend einer Menge von 0 - 50 % des Pyrolysegases in den Vergaser eingeführt wird, wodurch das Anheben der Vergasungstemperatur und der Oxidation des Gases erreicht wird.

6. Verfahren nach einem der Ansprüche 1 - 5, **dadurch gekennzeichnet, dass** die Vergasertemperatur mithilfe von äußerer Energie erhöht wird, indem die Zusatzenergie in den Vergaser durch seine Wand eingeführt wird.

7. Verfahren nach einem der Ansprüche 1 - 6, **dadurch gekennzeichnet, dass** das Biomassenausgangsprodukt getrocknet wird, bis es einen Feuchtigkeitsgehalt von 15 - 25 Gew.-% hat, bevor es dem Pyrolyseverfahren zugeführt wird.

8. Verfahren nach einem der Ansprüche 1 - 7, **dadurch gekennzeichnet, dass** das Pyrolysegas vorzugsweise weniger als 0,1 Gew.-% Feststoffe enthält.

9. Verfahren nach einem der Ansprüche 1 - 8, **dadurch gekennzeichnet, dass** der Vergaser ein röhrenförmiges Gefäß mit einer feuerfesten Auskleidung umfasst.

10. Verfahren nach einem der Ansprüche 1 - 9, **dadurch gekennzeichnet, dass** der Vergaser einen Katalysator, vorzugsweise in Form eines Monolithen umfasst.

11. Verfahren nach einem der Ansprüche 1 - 10, **dadurch gekennzeichnet, dass** Dampf in den Vergaser eingeführt wird, um die Zusammensetzung des Synthesegases zu modifizieren.

12. Verfahren nach einem der Ansprüche 1 - 11, **dadurch gekennzeichnet, dass** Dampf in den Vergaser nur zusammen mit dem Pyrolysegasstrom eingeführt wird.

13. Verfahren nach einem der Ansprüche 1 - 12, **dadurch gekennzeichnet, dass** zusätzliche Wärme in den Vergaser eingeführt wird, indem gasförmige und flüssige Produktströme und Nebenströme aus späteren Verfahrensschritten des Gases zirkulieren gelassen werden.

14. Verfahren nach einem der Ansprüche 1 - 13, **dadurch gekennzeichnet, dass** Fluidisierung in der Pyrolysestufe mithilfe von Dampf, zirkulieren gelassenem Produktgas, anderen Gasströmen wie beispielsweise Kohlendioxid, das aus dem Produktgas abgetrennt wurde, oder Mischungen der oben genannten Gassorten erreicht wird.

15. Verfahren nach einem der Ansprüche 1 - 14, **dadurch gekennzeichnet, dass** 20-100 % Ausgangsmaterial pyrolisiert wird.

16. Verfahren nach einem der Ansprüche 1 - 15, **dadurch gekennzeichnet, dass** die Pyrolysegas in einer Abscheideeinheit abgetrennt werden, die durch eine Zyklonanordnung, die zumindest einen Multiportzyklon umfasst, gebildet wird.

17. Verfahren nach einem der Ansprüche 1 - 16, **dadurch gekennzeichnet, dass** das Synthesegas zu einer Gasbehandlungsstufe geleitet wird, die vorteilhaft eine GTL-Synthese oder eine Wasserstofferzeugung ist.

18. Verfahren zur Kraftstoffherstellung, **dadurch gekennzeichnet, dass** das Synthesegas, das nach einem der Ansprüche 1 - 16 hergestellt wurde, zu einer GTL-Synthesestufe geleitet wird, die zur Herstellung von Dieselöl oder Methanol geeignet ist.

## Revendications

1. Procédé de production d'un gaz de synthèse à partir d'une charge d'alimentation de biomasse dans un appareil pyrolyseur-gaséifieur, **caractérisé par**
- la fragmentation et le séchage de la charge d'alimentation de biomasse,
- l'introduction de la biomasse fragmentée et séchée dans le pyrolyseur dans lequel, sous une atmosphère essentiellement exempte d'oxygène, au contact d'une matière particulaire inorganique de sable et à une température de fonctionnement de pyrolyse de 450 °C à 550 °C, un gaz de pyrolyse et un produit de carbonisation solide sont formés,
- la séparation des gaz de pyrolyse du produit de carbonisation dans un séparateur de solides,
- l'introduction des gaz de pyrolyse essentiellement exempts de solides et essentiellement exempts de cendres dans un gaséifieur, auquel de la chaleur supplémentaire est fournie afin de former un gaz de synthèse, le gaséifieur ayant une température de fonctionnement de 800 °C à 1 500 °C, et
- le passage du produit de carbonisation contenant du carbone et des cendres dans une chambre de combustion et la combustion du produit de carbonisation dans celle-ci à une température inférieure à 800 °C pour chauffer la matière particulaire inorganique.

2. Procédé selon la revendication 1, **caractérisé en ce que** la pyrolyse est menée dans un appareil comprenant en combinaison 2 réacteurs à solides en circulation, moyennant quoi la pyrolyse a lieu dans le premier réacteur et la régénération et le chauffage de la matière inorganique en circulation ainsi que la combustion du produit de carbonisation ont lieu dans le second réacteur.

3. Procédé selon la revendication 1 ou 2, **caractérisé en ce que** la température de combustion du produit de carbonisation est de préférence de 700 °C à 750 °C.

4. Procédé selon l'une quelconque des revendications 1 à 3, **caractérisé en ce que** la température de fonctionnement du pyrolyseur est de préférence de 475 °C à 525 °C.

5. Procédé selon l'une quelconque des revendications 1 à 4, **caractérisé en ce que** l'oxygène supplémentaire est introduit dans le gaséifieur en une quantité de 0 à 50 % de la quantité du gaz de pyrolyse pour ainsi accomplir l'élévation de la température du gaséifieur et l'oxydation du gaz.

6. Procédé selon l'une quelconque des revendications 1 à 5, **caractérisé en ce que** la température du gaséifieur est élevée à l'aide d'énergie externe par l'intermédiaire de l'importation de l'énergie supplémentaire vers le gaséifieur à travers sa paroi.

7. Procédé selon l'une quelconque des revendications 1 à 6, **caractérisé en ce qu'**avant d'être passée par le procédé de pyrolyse, la charge d'alimentation de biomasse est séchée jusqu'à une teneur en humidité de 15 à 25 % en poids.

8. Procédé selon l'une quelconque des revendications 1 à 7, **caractérisé en ce que** le gaz de pyrolyse contient moins de 0,1 % en poids de solides.

9. Procédé selon l'une quelconque des revendications 1 à 8, **caractérisé en ce que** le gaséifieur comporte une cuve tubulaire avec un revêtement réfractaire.

10. Procédé selon l'une quelconque des revendications 1 à 9, **caractérisé en ce que** le gaséifieur comprend un catalyseur de préférence sous forme de monolithe.

11. Procédé selon l'une quelconque des revendications 1 à 10, **caractérisé en ce que** de la vapeur d'eau est importée vers le gaséifieur afin de modifier la composition du gaz de synthèse.

12. Procédé selon l'une quelconque des revendications 1 à 11, **caractérisé en ce que** de la vapeur d'eau est importée vers le gaséifieur seulement avec le courant gazeux de pyrolyse.

13. Procédé selon l'une quelconque des revendications 1 à 12, **caractérisé en ce que** de la chaleur supplémentaire est importée vers la gaséifieur par des courants de produits gazeux et liquides en circulation et les courants secondaires issus des dernières étapes de traitement du gaz.

14. Procédé selon l'une quelconque des revendications 1 à 13, **caractérisé en ce qu'**une fluidisation à l'étape du pyrolyseur est réalisée à l'aide de vapeur d'eau, de produit gazeux en circulation, d'autres courants gazeux, comme le dioxyde de carbone séparé du produit gazeux, ou de mélanges des espèces gazeuses mentionnées ci-dessus.

15. Procédé selon l'une quelconque des revendications 1 à 14, **caractérisé en ce que** 20 à 100 % de la charge d'alimentation sont pyrolysés.

16. Procédé selon l'une quelconque des revendications 1 à 15, **caractérisé en ce que** les gaz de pyrolyse sont séparés dans une unité de séparation formée par un ensemble de cyclones comprenant au moins un cyclone à plusieurs entrées.

17. Procédé selon l'une quelconque des revendications 1 à 16, **caractérisé en ce que** le gaz de synthèse est passé par une étape de traitement de gaz qui permet de manière avantageuse une synthèse GTL ou la production d'hydrogène.

18. Procédé de production d'un carburant de trafic, **caractérisé en ce que** le gaz de synthèse produit selon l'une quelconque des revendications 1 à 16 est passé par une étape de synthèse GTL appropriée pour produire une huile diesel ou du méthanol.
